# EUROPEAN PATENT APPLICATION

(11) **EP 1 310 158 A1**
(43) Date of publication of application: **14.05.2003**
(21) Application number: 99929790.6
(22) Date of filing: 12.07.1999
(51) Int. Cl.: A01G 27/00

(54) **AUTOMATIC WATER FEED DEVICE FOR FLOWERPOT**

(71) Applicant: Nagoya, Tsutomu, Chiba-shi, Chiba 261-0012 (JP)
(72) Inventor: Nagoya, Tsutomu, Chiba-shi, Chiba 261-0012 (JP)
(74) Representative: Strobel, Wolfgang, Dipl.-Ing.
(86) International application number: JP9903749
(87) International publication number: WO01003496

(57) **Abstract**

A flowerpot of bottom surface water feed system in which the flowerpot is dipped approx. several centimeters in depth into water and sucks water through an original water drain port, wherein a water storage tank is set in water storage case together with one or more flowerpots, water in the water storage tank flows into the water storage case through a water passing hole, an opening and closing operation for the water passing hole is performed on the bottom lower surface of the water storage tank by a plug interlocked with a float so as to maintain the water level in the water storage case generally at a constant, and also a level detecting float having a permanent magnet is installed in the water storage tank so as to detect and indicate a level position lowered according to a reduction in water amount.

## Description

### Technical Explanation

This invention concerns a low cost product which has a simple and sure water-feeding mechanism for bottom water-feeding flowerpots without using any electric power.

### Technical Background

Normally water is supplied from above to a flowerpot. Instead, this bottom Water Feed Device supplies water through the soil from the bottom of the flowerpots to the roots of the plant.
In the past, there have been three methods for automatic bottom Water Feed Device for a long period of time without using the electric power

One is to place a water storage tank at lower outside of the flowerpot and supply the water to the plant root through the cord made of fine fabric using the capillary phenomenon. The defects of this method are the unstable and uncertain water supply. Also the product becomes tall and large therefore the design is not attractive.

One is to place a water storage tank at the side of the flowerpot and connect the two with a water channel so that the water pressure and capillary phenomenon work to supply water to the plant root. The defect of this method is the water supply depends on the water level, i.e. pressure, and therefore the water supply increases when the water is high and decreases when the water is low. This environment of fluctuating water supply is not good for the plant and in the worst case the root may be rotten..

One is a system made of a water tank, a float and a valve which opens and closes depending on the height of the float and which controls the water flow so that the height of the water in another water tank. The flowerpot is placed in the second water tank and therefore the water supply is constant.

Functionally, this method is excellent but the system becomes large and complex with the design of the float and the valve, which make the whole system large and costly. Also designwise, it is not attractive.

The purpose of this invention is to offer an automatic water feeder for the flowerpot solving the defects explained above, with small size, good design, low cost, and steady water supply for a long period. Also, the purpose of this invention includes offering an automatic water feeder that gives warning against carelessly forgotten water supply after long period of time .

### Disclosure of the Invention

With this invention, there are a water tank and more than one flowerpots within a water supply case. The water in the water tank flows into the case through the hole at the bottom. The hole opens and closes with a plug which is connected to a float that moves up and down with the change of the water level, therefore the water level inside the case is kept roughly the same which results in a steady water supply.

If in the case of only one flowerpot, the water tank is designed to surround the flowerpot and the float shape is also a ring type that surrounds the flowerpot.

This invention has a float to measure the water level in the water tank fitted with a magnet. The lead switch or the hole element detects the magnet which came down with the lowered water surface and warn the men with an electric device using light, sound or voice.

### Brief Explanation of the Diagrams

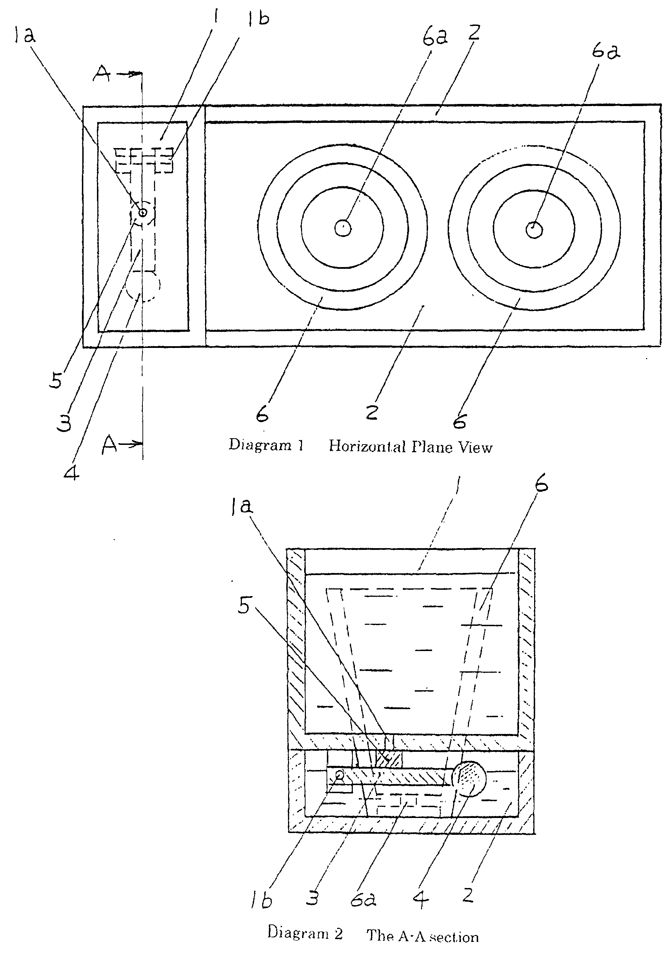

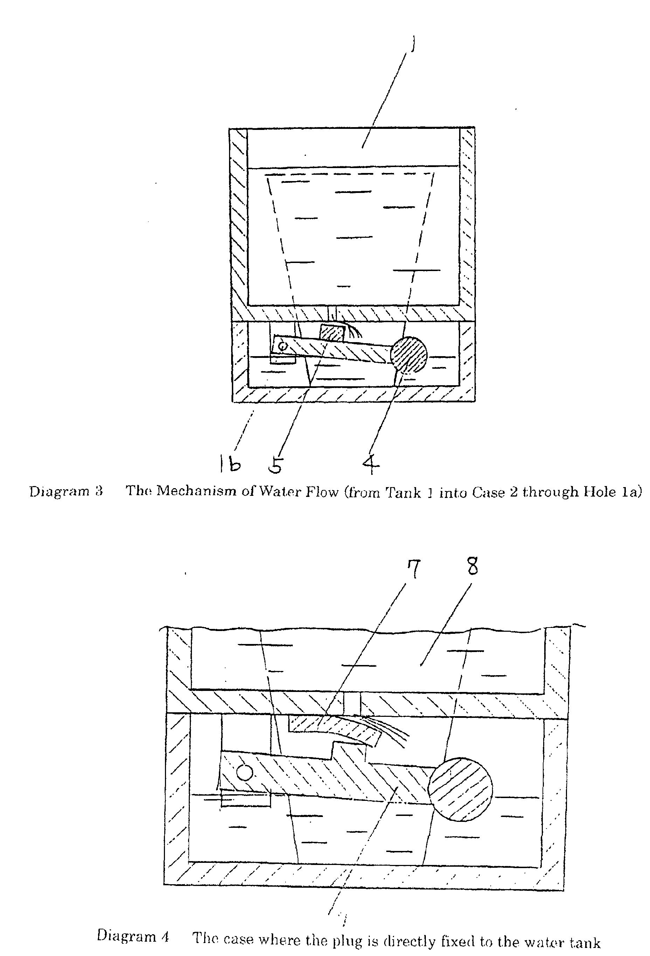

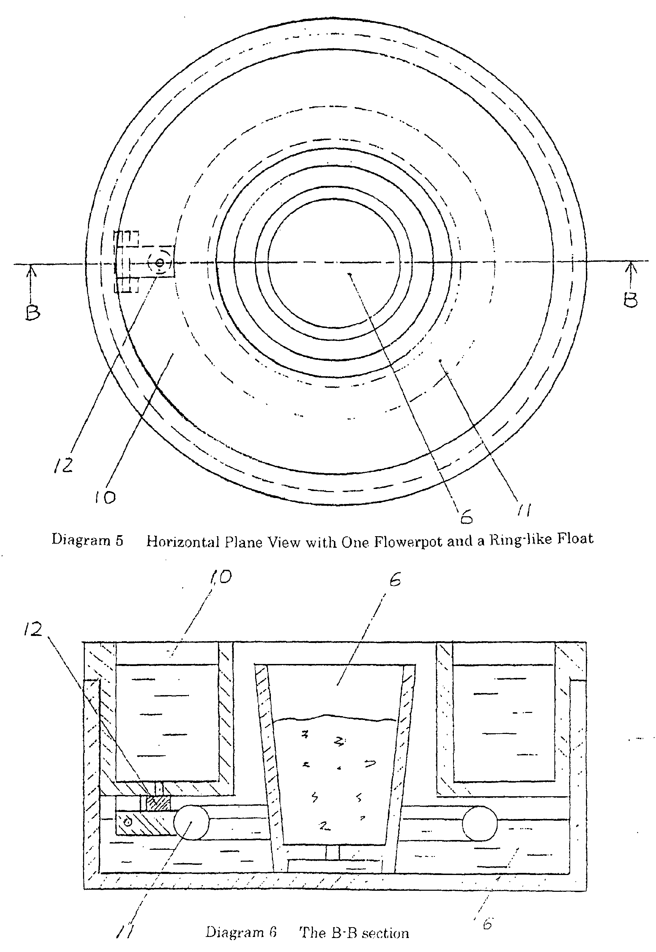

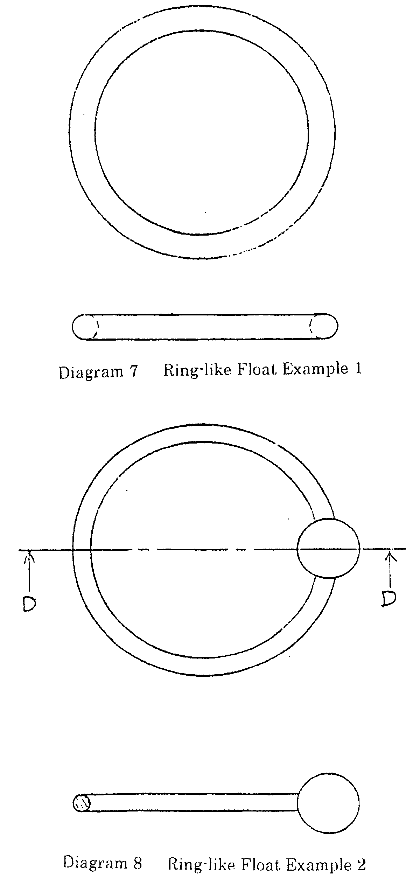

Diagram 1 is the horizontal plane view and Diagram 2 is the A-A section. The water inside the water case is kept above a certain height and there is no water flowing out of the water tank 1. Diagram 3 is to show the water inside tank 1 flows into case 2 through hole 1a. Diagram 4 is the case where the plug is directly fixed to the water tank not through a rod.

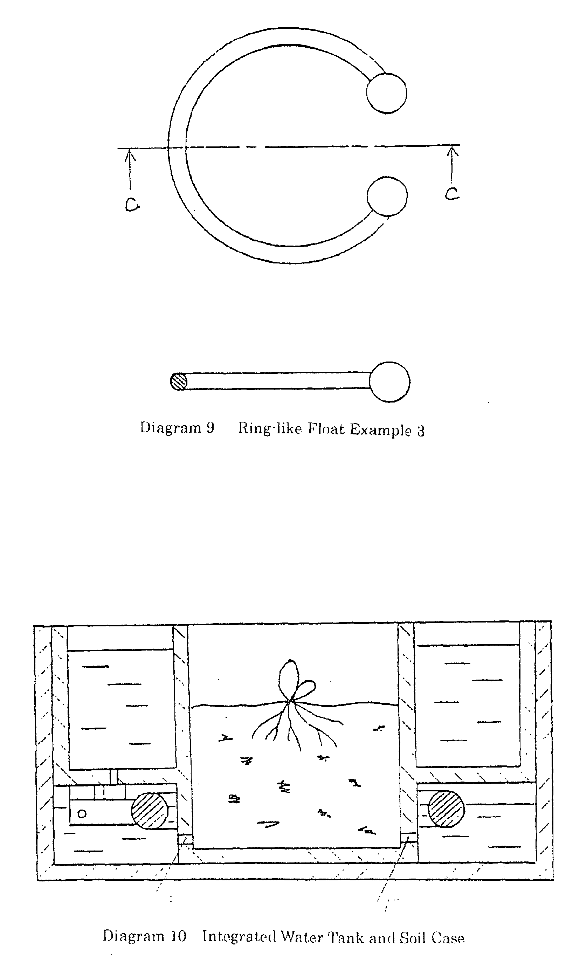

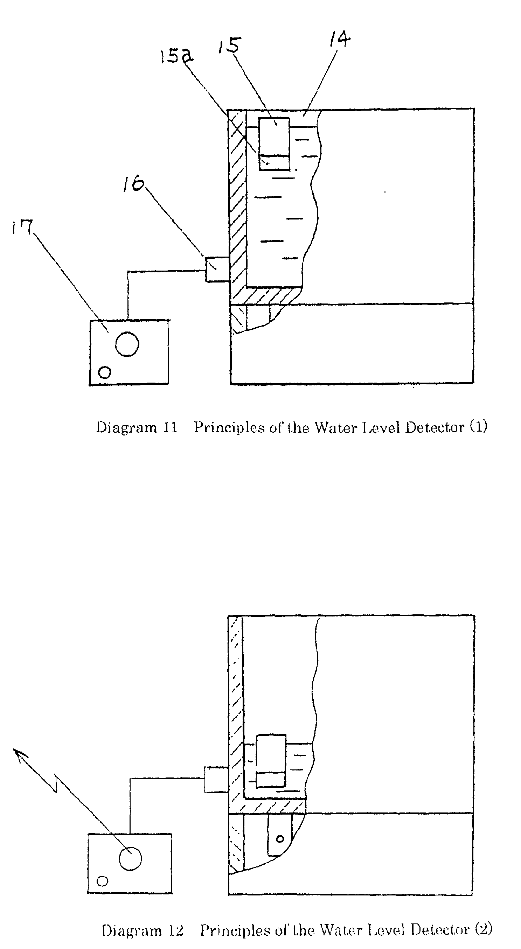

Diagram 5 is horizontal plane view with one flowerpot and a ring-like float is used. Diagram 6 is the B-B section. Diagrams 7, 8, and 9 show various designs of ring-like float. Diagram 10 is the case where the water tank and the soil case are integrated. Diagrams 11 and 12 shows the principles of the water level detector in this invention.

### Best Form of Using This Invention

To describe the details of this invention, more explanation is given using the attached diagrams. Diagram 1 is the horizontal plane view of this invention and view and Diagram 2 is the A-A section. There is a water hole 1a at the bottom of the water tank And there is a fulcrum 1b fixed to the lower side of the bottom and the float 4 is fitted to the edge of the rod 3 which swings around the fulcrum 1b. The plug 5 is fitted on the rod at the point between the fulcrum 1b and float 4 where it fit to the water hole 1a. The plug 5 is made of soft and water sealing material such as rubber or high polymer to effectively seal the water off. There is a water hole 6a at the bottom or at the low point of the flowerpot 6. The water tank 1 and the flowerpot 6 are both set inside the water case 2. The water in the water case is to be absorbed by the plant inside the flowerpot through the water hole 6a.
When the float 4 reaches the set height together with the water level, the plug closes the water hole 1a. As a result, the water flow from the water tank is stopped and the water level inside the water case will not go higher. The water inside the water case 2 seeps through the hole 6a into the flowerpot 6 as the water is consumed by the plant.

As a result, the water inside the water case 2 is reduced and and the water level goes down. When the water level is below the set height, then the float 4 goes down and the plug 5 is detached from the hole 1a then the water flow from the water tank 1 into the wate case 6 resumes. Then the water level rises again and the float 4 goes up. When the wate level inside the case reaches the set height, the plug 5 closes the water hole 1a and the wate flow is stopped. The process is repeated and the water level inside the water case 2 is kep roughly constant. As a result, the water supply to the plant becomes ideal corresponding to the consumption of water by the plant. Diagram 2 shows the case when the water level inside the water case 2 is at the set height and the water flow is stopped. Diagram 3 is the case when the water level is below the set height and the water is flowing from the water tank 1. The placement of the fulcrum 1b and the plug 5 becomes important. The way this invention is designed in relation with the placement, the principle of the lever works and the pressure the plug 5 applies is twice as much as the buoyancy force of the float 4, hence large water stopping power of the float. Therefore the whole system can be small because the size of the float can be small..

As is shown in Diagram 4, it is possible to place the plug 7 under the bottom of the water tank 7. Rod 9 applies the pressure to stop the water. Diagram 5 shows the case, in which the ring-type water tank is surrounding the flowerpot 6 and the float is also surrounding the flowerpot as the ring float 11. By using the ring type, we can utilize the small space more effectively and the water tank has more capacity than it looks. As the result of utilizing the float with larger volume and the principle of the lever, the functionality increases and which in turn makes it possible to design a smaller size system with more balanced outlook. That makes the product more attractive in the market. Also the larger pressure by the plug 12, that is, the more water stopping power, means the possibility of employing less precise parts to realize enough performance. This is one of the important issue to lowering the cost

In Diagram 5 and 6, the outlook of the system is cylindrical but it is possible to design the case in a form of prism, truncated cone and/or truncated pyramid, etc. Diagram 7, 8, 9 shows various shapes of the ring-type float. In Diagram 10, the water tank and the soil case are combined. There are several water holes 13 placed on the lower side of the soil case. In Diagram 11, the water level monitoring float 15 is placed inside and the magnetism detector 16 is placed on the lower outside using the lead switch or the hole switch. The magnetism detector 16 is connected electrically with the display unit 17. The display unit 17 is composed of the display tool using light, sound or voice, the circuit unit and the power unit. The connection can be either by cable or by radio. The electric source can be either a battery or the normal home outlet. When the water volume inside the water tank 14 is large, namely when the water level is high, the distance between the magnet 15a and magnetism detector 16 is large and the display unit 17 does not act as is shown in Diagram 11. When the water level is low as is the case of Diagram 12, then both the detector float 15 and the magnet 15a come down and approaches to the magnetism detector 16. When the distance is smaller than a set value, the magnet detector 16 works and the display unit warns the men that the water level is low. It may be worthwhile to add a sensor to detect men's approach so that the display unit works only when a man is near.

### Possibility of Industrial Usage

As described above, the Automatic Water Feed Device for Flowerpots by this invention supplies water automatically to the flowerpot as the plant consumes it, once the water is stored in the water tank. Therefore, it is not necessary to give water to the flowerpot for a long period of time. Normally, once or twice a month is enough. As a result, it enables long trips for a family without worrying about the plants.

## Claims

1. The Automatic Water Feed Device for Flowerpots composed of the water storage tank 1 and water case with the bottom water hole 1a, the fulcrum 1b fixed at the lower side of the bottom, the rod 3 which swings around the fulcrum 1b, the float 4 which is fixed to the edge of the rod 3 and the plug 5 which is fitted on the rod at the water hole 1a between the fulcrum 1b and float 4 where higher pressure is created at the plug than the buoyancy of the float using the principle of the leverage.

2. The Automatic Water Feed Device for a Flowerpot which is described in the Article 1 of this Range of Claim with the features of flowerpot-surrounding ring-type water tank 10 and the flowerpot-surrounding ring-type float 11.

3. The Automatic Water Feed Device for Flowerpots with a water level monitor which is composed of the water-level detecting float 15 using a permanent magnet 15a, the magnetism detector 16, and the display unit 17 connected electrically with the detector, which is described in the Article 1 and 2 of this Range of Claim.
